(19) **Europäisches Patentamt**
**European Patent Office**
**Office européen des brevets**

(11) **EP 4 033 646 A1**

(12) **EUROPÄISCHE PATENTANMELDUNG**

(43) Veröffentlichungstag:
**27.07.2022 Patentblatt 2022/30**

(21) Anmeldenummer: **22152395.4**

(22) Anmeldetag: **20.01.2022**

(51) Internationale Patentklassifikation (IPC):
**H02M 1/12** *(2006.01)* **H02J 1/02** *(2006.01)*
**H02M 7/493** *(2007.01)* **H02M 7/5387** *(2007.01)*

(52) Gemeinsame Patentklassifikation (CPC):
**H02M 1/12; H02J 1/02; H02M 7/493;**
**H02M 7/53871**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.01.2021 DE 102021200526**

(71) Anmelder: **Karlsruher Institut für Technologie**
**76131 Karlsruhe (DE)**

(72) Erfinder:
• **Bernet, Daniel**
**76131 Karlsruhe (DE)**
• **Hiller, Marc**
**75015 Bretten (DE)**

(74) Vertreter: **Altmann Stößel Dick Patentanwälte**
**PartG mbB**
**Theodor-Heuss-Anlage 2**
**68165 Mannheim (DE)**

(54) **VERFAHREN UND VORRICHTUNG ZUR VERRINGERUNG VON STROMOBERSCHWINGUNGEN**

(57) Die Erfindung betrifft ein Verfahren (150), ein Computerprogramm und eine Vorrichtung (110) zur Verringerung von Stromoberschwingungen, insbesondere von leistungselektronischen Stromrichtern. Das Verfahren (150) umfasst hierbei die Schritte:
a) Zuführen eines Eingangsstroms $i_b$ an einen Knotenpunkt K, welcher mit einem aktiven Filter (112) verbunden ist, wobei der Eingangsstrom $i_b$ eine sinusförmige Grundschwingungskomponente $i_b(1)$ und eine Summe von Oberschwingungskomponenten $i_b(n)$, $n \geq 2$ umfasst;
b) Bestimmen von Amplitude und Phasenlage der sinusförmigen Grundschwingungskomponente $i_b(1)$ des Eingangsstroms $i_b$ aus dem zeitlichen Verlauf des Eingangsstroms $i_b$;
c) Messen eines zeitlichen Verlaufs einer Netzspannung $v_g$ eines elektrischen Netzes (120), dem ein aus dem Knotenpunkt K abfließender Netzstrom $i_g$ über eine netzseitige Induktivität $L_g$ zugeführt wird;
d) Festlegen eines Sollwerts für den Netzstrom $i_g$ mittels eines weiterhin aus dem Knotenpunkt $K$ abfließenden Filterstroms $i_{af}$, wobei der Filterstrom $i_{af}$ derart ausgestaltet ist, dass eine Grundschwingungskomponente $i_g(1)$ des Netzstroms $i_g$ der sinusförmigen Grundschwingungskomponente $i_b(1)$ des Eingangsstroms $i_b$ entspricht; und
e) Bereitstellen des Netzstroms $i_g$ über die netzseitige Induktivität $L_g$ an das elektrische Netz (120), wobei der Netzstrom $i_g$ mittels einer von dem aktiven Filter (112) bereitgestellten Filterspannung $v_{af}$ unter Berücksichtigung der Netzspannung $v_g$ und einer netzseitigen Induktivität $L_g$ eingestellt wird.

Die Erfindung eignet sich vor allem zur Erhöhung der Netzstabilität durch Bereitstellung einer guten Strom- und Spannungsqualität in Windparks (134), Solarparks, Ladestationen für elektrische Fahrzeuge oder netzgebundenen Batterie- oder Wasserstoffspeichern.

Fig. 7

EP 4 033 646 A1

**Beschreibung**

Gebiet der Erfindung

Die vorliegende Erfindung ist auf dem Gebiet der Elektrotechnik angesiedelt und betrifft ein Verfahren, ein Computerprogramm und eine Vorrichtung zur Verringerung von Stromoberschwingungen, insbesondere von leistungselektronischen Stromrichtern. Die Erfindung eignet sich vor allem zur Erhöhung der Netzstabilität durch die Bereitstellung einer guten Strom- und Spannungsqualität in Windparks, Solarparks, Ladestationen für elektrische Fahrzeuge oder netzgebundenen Batterie- oder Wasserstoffspeichern; weitere Anwendungen sind jedoch denkbar.

Stand der Technik

Als Folge der Energiewende sowie einer steigenden Bedeutung der Elektromobilität ist zu erwarten, dass ein Einsatz von leistungselektronischen Stromrichtern in der elektrischen Energieversorgung zunehmen wird. Um hierbei einen stabilen Netzbetrieb und eine gute Spannungsqualität bereitzustellen, werden zukünftig anspruchsvolle Grenzwerte für Stromoberschwingungen im elektrischen Netz gelten. Die leistungselektronischen Stromrichter verursachen aufgrund ihrer Funktionsweise über einen weiten Frequenzbereich jedoch Strom- und Spannungsverzerrungen, die durch Wechselwirkung mit anderen Netzbetriebsmitteln zu harmonischen Instabilitäten und sogar zu einer Unterbrechung der Energieversorgung führen können.

Aus dem Stand der Technik sind Verfahren, Computerprogramme und Vorrichtungen zur Verringerung von Stromoberschwingungen bekannt. Hierzu werden in den leistungselektronischen Stromrichtern üblicherweise passive Filter eingesetzt, die Spulen, Kondensatoren und Widerstände umfassen, welche durch eine Verringerung der harmonischen Verzerrungen eine Einhaltung von Netznormen ermöglichen. Aufgrund hoher Materialkosten verursachen die passiven Filter jedoch hohe Zusatzkosten für die Stromrichter. Darüber hinaus stellen zusätzliche Verluste, große Spannungsabfälle, verringerte Dynamik, geringe Leistungsdichte, Frequenzabhängigkeit und Schwingungsanfälligkeit wesentliche Nachteile der passiven Filter dar.

Um Kosten und Aufwand für die passiven Filter zu begrenzen, werden daher zusätzlich oder alternativ aktive Filter eingesetzt. Als "aktive Filter" werden selbstgeführte Stromrichter bezeichnet, die zur Verringerung von Stromoberschwingungen eingesetzt werden und somit eine Verringerung des Aufwands für die passiven Filter in Stromrichtern ermöglichen, siehe insbesondere B. Singh, K. Al-Haddad, und A. Chandra, A Review of Active Filters for Power Quality Improvement, IEEE Transactions on Industrial Electronics 46(5), 1999, S. 960-71, und C. Lascu, L. Asiminoaei, I. Boldea, und F. Blaabjerg, Frequency Response Analysis of Current Controllers for Selective Harmonie Compensation in Active Power Filters, IEEE Transactions On Industrial Electronics 56(2), 2009, S. 337-47.

Aktive Filter werden typischerweise parallel an ein elektrisches Netz angebunden; eine serielle Anbindung ist jedoch möglich. Bei der parallelen Anbindung resultiert eine netzseitige Induktivität $L_g$ aus einer Summe von Streuinduktivitäten vorhandener Netzbetriebsmittel, insbesondere Transformatoren, Kabel oder Freileitungen. Eine lastseitige Filterinduktivität $L_f$ dient dagegen einer Dämpfung von harmonischen Stromoberschwingungen in einem Laststrom $i_l$, wobei eine Kopplungsinduktivität $L_{af}$ als Regelstrecke für das stromgeregelte aktive Filter eingesetzt wird.

Insgesamt wird ein möglichst oberschwingungsarmer, sinusförmiger Netzstrom $i_g$ angestrebt. Der von der Last aufgenommene Laststrom $i_l$ umfasst gemäß Gleichung (1) jedoch eine sinusförmige Grundschwingungskomponente $i_l(1)$ und eine Summe aller Oberschwingungskomponenten $i_l(n), n \geq 2$:

$$i_l = i_l(1) + \sum_{n=2}^{\infty} i_l(n). \qquad (1)$$

Im Idealfall kann das aktive Filter sämtliche Oberschwingungskomponenten $i_l(n), n \geq 2$ mittels eines Kopplungsstroms $i_{af}$ gemäß Gleichung (2) kompensieren:

$$i_{af} = \sum_{n=2}^{\infty} i_l(n), \qquad (2)$$

so dass der resultierende Netzstrom $i_g$ gemäß Gleichung (3) der Grundschwingungskomponente $i_l(1)$ entspricht:

$$i_g = i_l - i_{af} = i_l(1). \qquad (3)$$

Um den gewünschten sinusförmigen Netzstrom $i_g$ gemäß Gleichung (3) zu erreichen, wird durch das aktive Filter der Laststrom $i_l$ gemessen. Durch Analyse einer Frequenzverteilung in dem Laststrom $i_l$, insbesondere mittels

Fourier Analyse, können in dem Laststrom $i_l$ auftretende Frequenzanteile getrennt und eine jeweilige Amplitude und Phasenlage bestimmt werden. Die identifizierten Oberschwingungskomponenten $i_l(n), n \geq 2$ in dem Laststrom $i_l$ werden gegenphasig als Sollwerte für eine Stromregelung verwendet, d.h. mit einer um 180° verschobenen Phasenlage. Ein Einprägen gegenphasiger harmonischer Komponenten gleicher Amplitude führt im Idealfall zu einer vollständigen Auslöschung der Oberschwingungskomponenten $i_l(n), n \geq 2$ an einem Knotenpunkt $K$, an dem der Netzstrom $i_g$, der Laststrom $i_l$ und der Kopplungsstrom $i_{af}$ zusammentreffen, wodurch der gewünschte sinusförmige Netzstrom $i_g$ gemäß Gleichung (3) erhalten wird. Insbesondere niederfrequente Oberschwingungskomponenten bis zu etwa 2,5 kHz können durch ein derartiges aktives Filter zuverlässig gemessen, signaltechnisch weiterverarbeitet und gegenphasig durch den Stromrichter erzeugt werden. Da das aktive Filter nur einzelne harmonische Oberschwingungskomponenten einprägt, kann es im Vergleich zu den angeschlossenen Lasten für eine geringere elektrische Leistung ausgelegt werden.

Nachteilig an derartigen aktiven Filtern ist, dass eine näherungsweise Auslöschung der Stromverzerrungen im Netzstrom $i_g$ nur durch exakte Messung der Frequenz, Amplitude und Phasenlage der zu kompensierenden Oberschwingungskomponenten erreicht werden kann. Hieraus ergeben sich gemäß dem *Nyquist*-Kriterium hohe Anforderungen an Stromsensoren und Analog-Digital Wandler, die den Strom mit möglichst hoher Auflösung, geringem Rauschen und hoher Abtastfrequenz messen und über einen möglichst störungsfreien Kommunikationskanal an eine Prozessoreinheit senden. Neben hoher Rechenleistung, insbesondere zur getrennten Regelung einzelner Oberschwingungskomponenten, erfordert eine Einprägung hochfrequenter Ströme eine hohe Regelfrequenz der Prozessoreinheit sowie eine hohe effektive Schaltfrequenz des Leistungsteils, wofür hochwertige Signalverarbeitungskomponenten sowie schnellschaltende Leistungshalbleiter und/oder Mehrpunkt-Stromrichter benötigt werden.

R. R. Pereira, C. H. da Silva, L. E. B. da Silva, G. Lambert-Torres, and J, O. P. Pinto, New Strategies for Application of Adaptive Filters in Active Power Filters, IEEE Transactions on Industry Applications 47(3), S. 1136-41, 2011, schlagen daher vor, auf eine genaue Messung einzelner Oberschwingungskomponenten zu verzichten, stattdessen den Laststrom $i_l$ zu messen, hieraus mittels eines adaptiven linearen Netzwerks ("ADALINE') die Grundschwingungskomponente $i_l(1)$ zu extrahieren und diese anschließend als Sollwert für den Netzstrom $i_g$ zu verwenden. Basierend auf der Annahme, dass die Last als Stromquelle eingerichtet ist und der Laststrom $i_l$ somit als fest eingeprägt angesehen wird, führt das Anlegen einer positiven (negativen) Spannung über die Kopplungsinduktivität $L_{af}$ zu einem Anstieg (einer Abnahme) des Netzstroms $i_g$. Mittels einer Hysterese-Regelung kann der Netzstrom $i_g$ in einem Hysterese-Band um die Grundschwingungskomponente $i_l(1)$ als Sollwert gehalten werden, was allerdings die Messung der Grundschwingungskomponente $i_g(1)$ als auch des Stromrippels $\sum_{n=2}^{\infty} i_g(n)$ des Netzstroms erfordert. Ferner ist hieran nachteilig, dass die Einprägung von Stromrippeln in die Kopplungsinduktivität $L_{af}$ eine hohe Spannung des aktiven Filters erfordert. Einen weiteren Nachteil stellt die begrenzte Dynamik des ADALINE-Netzwerks zur Erkennung der Grundschwingungskomponente $i_l(1)$ dar.

M. Routimo, M. and H. Tuusa, Current Sensorless Control of a Voltage-Source Active Power Filter, in Twentieth Annual IEEE Applied Power Electronics Conference and Exposition, 2005, APEC 2005, Austin, TX, USA, S. 1696-1702; M. E. Ortuzar, R, E. Carmi, J. W. Dixon, and L. Moran, Voltage-source active power filter based on Multilevel Converter and Ultracapacitor DC Link, IEEE Transactions On Industrial Electronics 53(2), 2006, 477-85; und M. Angulo, D. A. Ruiz-Caballero, J. Lago, M. L. Heldwein, and S. A. Mussa, Active Power Filter Control Strategy With Implicit Closed-Loop Current Control and Resonant Controller, IEEE Transactions On Industrial Electronics 60(7), 2013, S. 2721-30, schlagen eine spannungseinprägende Topologie unter Verzicht auf Stromsensoren vor. Das verwendete Regelungskonzept basiert auf einer Regelung einer Zwischenkreisspannung $U_{dc,af}$ des aktiven Filters. Hierzu erzeugt das aktive Filter eine Ausgangsspannung $u_f$, so dass die Zwischenkreisspannung $U_{dc,af}$ des aktiven Filters konstant auf ihrem Sollwert gehalten wird. Da die Zwischenkreisspannung $U_{dc,af}$ als einziger Regelkreis geregelt wird, tritt eine verringerte Dynamik auf, da sich die Zwischenkreisspannung $U_{dc,af}$ erst ändert, wenn bereits ein Strom in das aktive Filter fließt. Daher ist es weiterhin nachteilig, dass das aktive Filter für eine erhöhte Strombelastung im Hinblick auf mögliche Überströme in Folge von Lastsprüngen oder Netzfehlern auszulegen ist.

D. Bernet, L. Stefanski, R. Schwendemann, Ch. Rollbühler, und M. Hiller beschreiben in Grid-Connected Voltage Source Converters with integrated Multilevel-Based Active Filters, 2018 IEEE Energy Conversion Congress and Exposition (ECCE), 2018, eine neuartige hybride Stromrichter-Topologie mit kleiner dimensionierten passiven Komponenten, umfassend einen Hochleistungs-Hauptstromrichter und einen integrierten aktiven Filter mit geringer Leistung. Die gekoppelten Regelungsstrategien für eine Stromquellen- und eine Spannungsquellen-Topologie ermöglichen eine Verringerung der Schaltfrequenz-Stromwelligkeit, wodurch die gesamte harmonische Verzerrung des Ausgangsstroms signifikant auf unter 0,5 % abgesenkt wird.

EP 2 991 218 B1 offenbart eine Resonanzunterdrückungsvorrichtung zur Verringerung eines Kompensationsstroms bei Unterdrückung der durch eine Oberschwingungsspannung verursachten harmonischen Verzerrung. Die Resonanzunterdrückungsvorrichtung umfasst einen Wechselrichter, der dazu eingerichtet ist, dass er dem Energiesystem Wechselstrom zuführt, wobei der Wechselrichter parallel zu der Energieanlage geschaltet ist; eine Stromsollwert-Erzeugungseinheit, in welche die Spannung an einem Verbindungspunkt zwischen der Energieanlage und dem Energiesystem eingegeben wird und einen Stromsollwert bereitstellt, indem eine in der Spannung an dem Verbindungspunkt enthaltene Oberwellenkomponente mit einer Übertragungsfunktion multipliziert wird; und eine Stromsteuereinheit, die dazu eingerichtet ist, dass sie den von dem Wechselrichter ausgegebenen Wechselstrom auf der Grundlage des Stromsollwerts steuert.

Aufgabe der Erfindung

Ausgehend hiervon, besteht die Aufgabe der vorliegenden Erfindung darin, ein Verfahren, ein Computerprogramm und eine Vorrichtung zur Verringerung von Stromoberschwingungen bereitzustellen, welche die bekannten Nachteile und Einschränkungen des Standes der Technik zumindest teilweise überwinden.
Das Verfahren, das Computerprogramm und die Vorrichtung sollen dazu eingerichtet sein, hochfrequente Oberschwingungskomponenten mittels einer hochdynamischen Regelung zuverlässig, hochdynamisch und frequenzunabhängig über einen sehr weiten Frequenzbereich zu verringern, vorzugsweise vollständig zu kompensieren, ohne dass hierzu einzelne Oberschwingungskomponenten identifiziert werden müssen.

Offenbarung der Erfindung

Diese Aufgabe wird durch ein Verfahren, eine Vorrichtung und ein Computerprogramm zur Verringerung von Stromoberschwingungen gemäß den Merkmalen der unabhängigen Ansprüche gelöst. Vorteilhafte Weiterbildungen, welche einzeln oder in beliebiger Kombination realisierbar sind, sind in den abhängigen Ansprüchen dargestellt.
In einem ersten Aspekt betrifft die vorliegende Erfindung ein Verfahren zur Verringerung von Stromoberschwingungen. Das vorliegende Verfahren umfasst die im Folgenden im Einzelnen beschriebenen Schritte a) bis e), wobei alle Schritte a) bis e) vorzugsweise nacheinander und/oder gleichzeitig durchgeführt werden können. Darüber hinaus sind weitere Schritte, insbesondere der unten näher ausgeführte Schritt f), möglich.
Die einzelnen Schritte des vorliegenden Verfahrens sind:

a) Zuführen eines Eingangsstroms $i_b$ an einen Knotenpunkt K, welcher mit einem aktiven Filter verbunden ist, wobei der Eingangsstrom $i_b$ eine sinusförmige Grundschwingungskomponente $i_b(1)$ und eine Summe von Oberschwingungskomponenten $i_b(n)$, $n \geq 2$ umfasst;
b) Bestimmen von Amplitude und Phasenlage der sinusförmigen Grundschwingungskomponente $i_b(1)$ des Eingangsstroms $i_b$ aus dem zeitlichen Verlauf des Eingangsstroms $i_b$;
c) Messen eines zeitlichen Verlaufs einer Netzspannung $v_g$ eines elektrischen Netzes, dem ein aus dem Knotenpunkt K abfließender Netzstrom $i_g$ über eine netzseitige Induktivität $L_g$ zugeführt wird;
d) Festlegen eines Sollwerts für den Netzstrom $i_g$ mittels eines weiterhin aus dem Knotenpunkt $K$ abfließenden Filterstroms $i_{af}$, wobei der Filterstrom $i_{af}$ derart ausgestaltet ist, dass eine Grundschwingungskomponente $i_g(1)$ des Netzstroms $i_g$ der sinusförmigen Grundschwingungskomponente $i_b(1)$ des Eingangsstroms $i_b$ entspricht; und
e) Bereitstellen des Netzstroms $i_g$ über die netzseitige Induktivität $L_g$ an das elektrische Netz, wobei der Netzstrom $i_g$ mittels einer von dem aktiven Filter bereitgestellten Filterspannung $v_{af}$ unter Berücksichtigung der Netzspannung $v_g$ und einer netzseitigen Induktivität $L_g$ eingestellt wird.

Gemäß Schritt a) wird einem Knotenpunkt K ein Eingangsstrom $i_b$ zugeführt, der gemäß Gleichung (4) einen ersten Anteil in Form einer sinusförmigen Grundschwingungskomponente $i_b(1)$ und einen zweiten Anteil an sog. "Stromoberschwingungen", die sich aus einer Summe aller Oberschwingungskomponenten $i_b(n)$, $n \geq 2$ zusammensetzen, umfasst:

$$i_b = i_b(1) + \sum_{n=2}^{\infty} i_b(n). \qquad (4)$$

Erfindungsgemäß soll das vorliegende Verfahren derart vorgenommen werden, dass in dem gemäß Schritt e) einem elektrischen Netz bereitgestellte Netzstrom $i_g$ der Anteil der Stromoberschwingungen $\sum_{n=2}^{\infty} i_g(n)$ möglichst weitgehend verringert, vorzugsweise vollständig verringert, d.h. kompensiert, wird. Der Begriff der "Kompensation" der Stromoberschwingungen $\sum_{n=2}^{\infty} i_g(n) = 0$ besagt, dass der dem elektrischen Netz bereitgestellte Netzstrom $i_g$ gemäß nachstehender Gleichung (5) somit der sinusförmigen Grundschwingungskomponente $i_b(1)$ des während Schritt a) zugeführten Eingangsstroms $i_b$ entspricht:

$$i_g = i_b\,(1),\qquad\qquad(5)$$

während der Begriff der "Verringerung" der Stromoberschwingungen bedeutet, dass der resultierende Netzstrom $i_g$ oberschwingungsarm ist, d.h. dass die Stromoberschwingungen $\sum_{n=2}^{\infty} i_g\,(n)$ einen Anteil an dem Netzstrom $i_g$ aufweisen, der einen Grenzwert mindestens einer Netznorm, insbesondere ausgewählt aus VDE-AR-N 4105, IEC/TS 62578, EN61000-2-2, BDEW, IEEE 1547 oder IEEE 519, jeweils in der gültigen Fassung zum Zeitpunkt dieses Dokuments, nicht überschreitet.

In der Praxis kann hierbei jedoch ein geringer Unterschied zwischen einer Grundschwingungskomponente des Netzstroms $i_g(1)$ und der Grundschwingungskomponente $i_b(1)$ des Eingangsstroms auftreten, insbesondere um es auf diese Weise zu ermöglichen, dass das erfindungsgemäß eingesetzte aktive Filter seine Verlustleistung ausgleichen kann. Dieser Unterschied ist allerdings im Vergleich zu den Grundschwingungskomponenten $i_g(1)$ und $i_b(1)$ vernachlässigbar und kann daher für die weitere Beschreibung der vorliegenden Erfindung außer Betracht bleiben.

Eine derartige Form des Netzstroms $i_g$ wird erfindungsgemäß dadurch erreicht, dass der während Schritt a) zugeführte Eingangsstrom $i_b$ an dem Knotenpunkt K derart aufgeteilt wird, dass ein zusätzlich zu dem Netzstrom $i_g$ durch das aktive Filter erzeugter Filterstrom $i_{af}$ die Oberschwingungskomponenten $i_b(n)$, $n \geq 2$ möglichst weitgehend, vorzugsweise gemäß Gleichung (6) vollständig, übernimmt:

$$i_{af} = \sum_{n=2}^{\infty} i_b\,(n).\qquad\qquad(6)$$

Der Begriff des "Knotenpunktes" ergibt sich aus dem 1. Kirchhoffschen Gesetz nach Gleichung (7), gemäß dem in dem Knotenpunkt K die Summe der zufließenden Ströme, d.h. der Eingangsstrom $i_b$, gleich der Summe der abfließenden Ströme, d.h. der Summe aus dem Filterstrom $i_{af}$ und dem Netzstrom $i_g$, ist:

$$i_b = i_g + i_{af}.\qquad\qquad(7)$$

Um zu erreichen, dass der Netzstrom $i_g$ und der Eingangsstrom $i_b$ auch tatsächlich dieselbe sinusförmige Grundschwingungskomponente $i_b(1)$ aufweisen, erfolgt gemäß Schritt b) ein Bestimmen zumindest einer Amplitude und einer Phasenlage der sinusförmigen Grundschwingungskomponente $i_b(1)$ des Eingangsstroms $i_b$ aus dem zeitlichen Verlauf des Eingangsstroms $i_b$, insbesondere um zu ermöglichen, dass gemäß Schritt d) der Sollwert des Netzstroms $i_g$ derart eingestellt werden, dass dieser der sinusförmigen Grundschwingungskomponente $i_b(1)$ des Eingangsstroms $i_b$ entspricht. Der Begriff der "Amplitude" bezeichnet in der Leistungselektronik einen Maximalwert einer physikalischen Größe. Der Begriff der "Phasenlage" bezeichnet einen relativen Unterschied der Phase zu einer weiteren Phase, mit der die Phase verglichen wird.

Werden die Grundschwingungsströme $i_b(1)$ und $i_g(1)$ sowie die Summe aller Oberschwingungsströme $\sum_{n=2}^{\infty} i_b\,(n)$ und $\sum_{n=2}^{\infty} i_g\,(n)$ des Eingangs und des Netzes in den Knotensatz gemäß Gleichung (7) eingesetzt, so ergibt sich gemäß Gleichung (8):

$$i_{af} = \hat{\imath}_b(1)\cos(\omega t + \varphi_b) + \sum_{n=2}^{\infty} i_b\,(n) - \left(\hat{\imath}_g(1)\cos(\omega t + \varphi_g) + \sum_{n=2}^{\infty} i_g\,(n)\right)\qquad(8)$$

wobei $\hat{\imath}_b$ und $\varphi_b$ die Amplitude und die Phasenlage der Grundschwingungskomponente des Eingangsstroms $i_b$ und wobei und $\hat{\imath}_g$ und $\varphi_g$ die Amplitude und die Phasenlage der Grundschwingungskomponente des Netzstroms $i_g$ sind. Da das aktive Filter - bis auf einen geringen Grundschwingungsstrom zur Verlustdeckung - möglichst nur einen Verzerrungsstrom führen soll, soll die folgende Bedingung gemäß Gleichung (9) gelten:

$$i_{af}(1) = \hat{\imath}_b(1)\cos(\omega t + \varphi_b) - \hat{\imath}_g(1)\cos(\omega t + \varphi_g) \approx 0\qquad(9)$$

Die Bedingung gemäß Gleichung (9) kann insbesondere dann möglichst gut erfüllt werden, wenn sowohl die Amplitude als auch die Phasenlage des Eingangsstroms $i_b$ und des Netzstroms $i_g$ gleich sind.

In einer besonderen Ausgestaltung umfasst der Eingangsstrom $i_b$ einen Mehrphasenwechselstrom aus mindestens zwei, bevorzugt drei, voneinander unabhängigen Phasen. Der Begriff des "Mehrphasenwechselstroms" bezeichnet hierbei eine Aufeinanderfolge von mindestens zwei, bevorzugt drei einzelnen Wechselströmen oder einzelnen Wechselspannungen gleicher Frequenz, wobei die aufeinanderfolgenden Phasen zueinander in ihren Phasenwinkeln fest um einen Winkel von 360° geteilt durch die Anzahl der Phasen verschoben sind. Bei einem üblicherweise verwendeten Dreiphasenwechselstrom beträgt der Phasenwinkel somit 120°.

Vorzugsweise kann hierbei das Bestimmen der Amplitude und Phasenlage der sinusförmigen Grundschwingungskomponente $i_b(1)$ des Eingangsstroms $i_b$ gesondert für den zeitlichen Verlauf jeder Phase des als Mehrphasenwechselstrom vorliegenden Eingangsstroms $i_b$ über den jeweils gewählten Zeitraum erfolgen. In einer besonders bevorzugten Ausgestaltung kann das Bestimmen der Phasenlage der sinusförmigen Grundschwingungskomponente $i_b(1)$ des Eingangsstroms $i_b$ gemäß Schritt b) insbesondere eine Transformation und/oder eine Glättung des über einen Zeitraum gemessenen zeitlichen Verlaufs des Eingangsstroms $i_b$ umfassen.

Der Begriff der "Transformation" bezeichnet hierbei eine Umwandlung einer mehrphasigen, insbesondere dreiphasigen, Größe, deren Koordinaten im Falle von drei Phasen üblicherweise in Bezug auf die Achsen u, v, w, die jeweils um 120° zueinander verschoben sind, angegeben werden können, unter Beibehaltung eines Ursprungspunktes in ein zweiachsiges Koordinatensystem, dessen rechtwinklig zueinanderstehende Achsen üblicherweise mit d, q bezeichnet werden. Aus dem Stand der Technik sind hierfür verschiedene Arten der Transformation bekannt, wobei erfindungsgemäß vorzugsweise eine Park-Transformation verwendet werden kann. Der Begriff der "Park-Transformation" bezeichnet hierbei eine Umwandlung in ein rechtwinkliges Koordinatensystem, in dem die Koordinatenachsen d, q mit der Grundschwingungsfrequenz um den Ursprungspunkt rotieren. Bei konstanter Grundschwingungsfrequenz sind die Grundschwingungskomponenten der Koordinaten d, q zeitlich konstant. In Netzanwendungen wird das Koordinatensystem mit den Koordinaten d, q typischerweise an der Netzspannung orientiert, so dass deren Vektor auf der d-Achse liegt und ausschließlich einen d-Anteil aufweist. In diesem Fall entspricht die d-Komponente des Netzstroms einem Wirkstrom und die q-Komponente einem Blindstrom.

Weiterhin bezeichnet der Begriff der "Glättung" eine Umwandlung einer ersten Kurve in eine zweite Kurve geringerer Krümmung, die möglichst weitgehend mit der ersten Kurve übereinstimmt, insbesondere um ausgewählte Bestandteile einer Kurve zu entfernen, üblicherweise Frequenzanteile oder Rauschen. Im Falle der vorliegenden Erfindung kann die Glättung des transformierten zeitlichen Verlaufs des Eingangsstroms $i_b$ über den Zeitraum mittels eines elektronischen Filters oder eines software-basierten Filters erfolgen. Hierbei kann das Filter insbesondere ausgewählt sein aus einem Gleitenden Mittelwert-Filter oder einem Tiefpass-Filter. Als "Gleitendes Mittelwert-Filter" (engl. "Moving Average Filter") wird hierbei ein Filter bezeichnet, das aus einer ersten Datenmenge eine zweite Datenpunktmenge erstellt, die Mittelwerte gleichgroßer Untermengen der ersten Datenpunktmenge umfasst und optional gewichtet. Im Falle einer Gleichgewichtung wird der gleitende Durchschnitt üblicherweise auch als "Tiefpassfilter" bezeichnet.

Somit kann das Bestimmen das Bestimmen der Amplitude und Phasenlage der Grundschwingungskomponente $i_b(1)$ des Eingangsstroms $i_b$ insbesondere durch eine Park-Transformation des Eingangsstroms $i_b$ erfolgen. In den damit erhaltenen Koordinaten d, q ist die Grundschwingungskomponente $i_b(1)$ des Eingangsstroms $i_b$ zeitlich konstant und entspricht somit den Gleichgrößen. Hieraus lässt sich ableiten, dass alle anderen Frequenzanteile des Laststroms keine Gleichgrößen im Koordinatensystem mit den Koordinatenachsen d, q darstellen. Folglich lässt sich aus dem Eingangsstrom $i_b$ in den Koordinaten d, q die Grundschwingungskomponente $i_b(1)$ des Eingangsstroms $i_b$ durch eine einfache Glättung, bevorzugt in Form eines Gleitenden-Mittelwert-Filters, extrahieren. Betrag und Verhältnis der so bestimmten Komponenten d, q des Eingangsstroms $i_b$ stehen folglich in einem direktem Zusammenhang zur Amplitude und Phasenlage des Eingangsstroms $i_b$, wobei dies der Phasenlage bezogen auf die Netzspannung entspricht.

Gemäß Schritt c) des vorliegenden Verfahrens erfolgt ein Messen eines zeitlichen Verlaufs einer Netzspannung $v_g$ eines elektrischen Netzes, dem ein aus dem Knotenpunkt K abfließender Netzstrom $i_g$ über eine netzseitige Induktivität $L_g$ zugeführt wird. Der Begriff der "netzseitigen Induktivität $L_g$" bezeichnet hierbei eine zwischen einem Ausgang, der zum Bereitstellen des aus dem Knotenpunkt K abfließenden Netzstroms $i_g$ an ein elektrisches Netz eingerichtet ist, und dem Knotenpunkt K anliegende Induktivität, die vorzugsweise einer Summe von Streuinduktivitäten vorhandener Netzbetriebsmittel, insbesondere von Transformatoren, Kabeln oder Freileitungen, aber auch einer zusätzlichen Spule, umfassen kann.

Gemäß dem 2. Kirchhoffschen Gesetz addieren sich alle Teilspannungen eines Umlaufs Gleichung (10) unter Berücksichtigung ihrer Richtung zu null auf:

$$-v_{af} + v_{Lg} + v_g = 0, \qquad\qquad (10)$$

wobei $v_{Lg}$ eine über der netzseitigen Induktivität $L_g$ abfallende Spannung bezeichnet und $v_{af}$ eine im Folgenden auch als "Filterspannung" bezeichnete Spannung $v_{af}$, die durch das aktive Filter, das als Spannungsquelle ausgestaltet ist, bereitgestellt wird. Im Unterschied zu vielen aus dem Stand der Technik bekannten Verfahren wirkt die Filterspannung

$v_{af}$ direkt auf den Knotenpunkt $K$ der Vorrichtung ein, ohne zuvor über eine erfindungsgemäß vollständig entbehrliche, teilweise im Stand der Technik jedoch verwendete Kopplungsinduktivität $L_{af}$ abzufallen.

Der Begriff des "aktiven Filters" bezeichnet hierbei, wie eingangs erwähnt, einen selbstgeführten Stromrichter, der erfindungsgemäß zur Verringerung der Stromoberschwingungen $\sum_{n=2}^{\infty} i_b(n)$ eingesetzt wird. Hierbei betrifft der Begriff des "Stromrichters" eine Einrichtung, die zur Umwandlung von Gleichstrom in Wechselstrom oder umgekehrt, auch als "Wechselrichter" bezeichnet, oder zur Änderung eines Parameters des Gleichstroms oder des Wechselstroms, auch als "Umrichter" bezeichnet". Weiterhin betrifft der Begriff "selbstgeführt", dass der Stromrichter mittels abschaltbarer Bauelemente, bevorzugt mittels Halbleiter-Bauelementen, vorzugsweise mittels Dioden, Transistoren und/oder Thyristoren, insbesondere mittels einer in der Leistungselektronik weit verbreiteten Konfiguration von Transistoren mit antiparallelen Dioden, betrieben wird. Wie unten näher erläutert, handelt es sich bei dem erfindungsgemäßen aktiven Filter um ein spannungseinprägendes aktives Filter, wobei der Begriff "spannungseinprägend" angibt, das das aktive Filter dazu eingerichtet ist, die erfindungsgemäß gewünschte Filterspannung $v_{af}$ bereitzustellen.

Insbesondere kann das Messen des zeitlichen Verlaufs der Netzspannung $v_g$ des elektrischen Netzes, welchem der aus dem Knotenpunkt K abfließende Netzstrom $i_g$ über die netzseitige Induktivität $L_g$ zugeführt wird, eine Messung der dreiphasigen Netzspannung und anschließender Park-Transformation in das Koordinatensystem mit den Koordinatenachsen d, q umfassen. Hierzu kann vorzugsweise eine Phasenregelschleife verwendet werden.

Wie unten näher erläutert, kann aus Gleichung (10) der Netzstrom $i_g$ gemäß Gleichung (11) zu

$$i_g = \frac{1}{L_g} \int (v_{af} - v_g) \cdot \partial t \qquad (11)$$

bestimmt werden. Hieraus ergibt sich, dass der Netzstrom $i_g$ gemäß Schritt e) bei bekannter netzseitiger Induktivität $L_g$ und unter Verwendung der gemäß Schritt c) gemessenen Netzspannung $v_g$ mittels der von dem aktiven Filter bereitgestellten und auf den Knotenpunkt K einwirkenden Filterspannung $v_{af}$ auf einfache und unmittelbare Weise eingestellt werden kann.

Insbesondere ergibt sich aus Gleichung (11), dass hierdurch in vorteilhafter Weise einerseits eine hochdynamische Regelung des Netzstroms $i_g$ und dadurch eine Auslegung der Vorrichtung zur Verringerung der Stromoberschwingungen für einen Bruchteil der angeschlossenen elektrischen Lastleistung ermöglicht wird. Während der erstgenannte Vorteil insbesondere eine Berücksichtigung von schnellen, transienten Änderungen im Eingangsstrom $i_b$ erlaubt, ermöglicht der letztgenannte Vorteil eine deutliche Verringerung des Aufwandes.

Gemäß Schritt d) erfolgt das Festlegen eines Sollwerts für den Netzstrom $i_g$ mittels des weiterhin aus dem Knotenpunkt $K$ abfließenden Filterstroms $i_{af}$, wobei der Filterstrom $i_{af}$ derart ausgestaltet ist, dass eine Grundschwingungskomponente $i_g(1)$ des Netzstroms $i_g$ der Grundschwingungskomponente $i_b(1)$ des Eingangsstroms $i_b$ entspricht. Insbesondere um einerseits eine minimale Strombelastung des aktiven Filters und andererseits einen unabhängigen Betrieb des aktiven Filters von anderen Netzbetriebsmitteln zu ermöglichen, kann der Sollwert des Netzstrom $i_g \approx i_b(1)$ festgelegt werden. Zusätzlich kann zu diesem Sollwert ein kleiner Grundschwingungsstrom addiert werden, der bevorzugt durch eine Energieregelung bestimmt werden kann und der insbesondere zur Deckung einer Verlustleistung des aktiven Filters dient. Da der Gesamtsollwert der Grundschwingungskomponente $i_b(1)$ entspricht, kann hierfür vorzugsweise eine konventionelle netzseitige Regelung basierend auf PI-Reglern eingesetzt werden. Unabhängig von der Art der Implementierung kann durch die erfindungsgemäß vorgeschlagene Schaltungsweise die inhärente Kompensation der Stromoberschwingungen $\sum_{n=2}^{\infty} i_b(n)$ erreicht werden.

Der Knotensatz in Gleichung (7) zeigt, dass der Netzstrom $i_g$ der Differenz des als Laststrom fungierenden Eingangsstrom $i_b$ und des Filterstroms $i_{af}$ entspricht. Soll die Grundschwingungskomponente $i_b(1)$ des Eingangsstroms $i_b$ folglich als Sollwert für den Netzstrom herangezogen werden, so ist somit der Grundschwingungsanteil des Filterstroms $i_{af}$ entsprechend Schritt d) auf Null zu setzen.

Gemäß Schritt e) des vorliegenden Verfahrens erfolgt schließlich das Bereitstellen des Netzstroms $i_g$ über die netzseitige Induktivität $L_g$ an das elektrische Netz, wobei in dem Netzstrom $i_g$ der Anteil der Stromoberschwingungen $\sum_{n=2}^{\infty} i_b(n)$ möglichst vollständig verringert, vorzugsweise gemäß Gleichung (5) vollständig kompensiert ist. Dieser Vorteil der vorliegenden Erfindung kann insbesondere anhand folgender Herleitung nachvollzogen werden:

In der nachstehenden Gleichung (12) ist zu beachten, dass die Spannungen $v_{af}$ und $v_g$ Grundschwingungs- und Oberschwingungskomponenten umfassen:

$$i_g(1) + \sum_{n=2}^{\infty} i_g(n) = \frac{1}{L_g} \int \left(v_{af}(1) + \sum_{n=2}^{\infty} v_{af}(n) - \left(v_g(1) + \sum_{n=2}^{\infty} v_g(n)\right)\right) \cdot \partial t \quad (12)$$

Bei näherer Betrachtung der Gleichung (12) kann leicht nachvollzogen werden, dass die Grundschwingungskomponente des Netzstroms $i_g(1)$ durch die Grundschwingungskomponenten der Spannungen gemäß der Gleichung (13)

$$i_g(1) = \frac{1}{L_g} \int (v_{af}(1) - v_g(1)) \cdot \partial t \quad (13)$$

und der Verzerrungsstrom $\sum_{n=2}^{\infty} i_g(n)$ durch die Oberschwingungskomponenten gemäß der Gleichung (14)

$$\sum_{n=2}^{\infty} i_g(n) = \frac{1}{L_g} \int \left(\sum_{n=2}^{\infty} v_{af}(n) - \sum_{n=2}^{\infty} v_g(n)\right) \cdot \partial t \quad (14)$$

hervorgerufen wird. Im Allgemeinen kann davon ausgegangen werden, dass die Verzerrung der Netzspannung $\sum_{n=2}^{\infty} v_g(n)$ gegenüber der Verzerrung eines selbstgeführten Stromrichters, also auch der des aktiven Filters $\sum_{n=2}^{\infty} v_{af}(n)$, vernachlässigbar ist. Daraus folgt Gleichung (15):

$$\sum_{n=2}^{\infty} i_g(n) = \frac{1}{L_g} \int \sum_{n=2}^{\infty} v_{af}(n) \cdot \partial t \quad (15)$$

Anhand Gleichung (15) wird deutlich, dass die Verzerrung der Grundschwingungskomponente des Netzstroms $i_g(1)$ bei einer Verringerung der Verzerrung der Filterspannung $v_{af}$ abnimmt. Letzteres kann vorzugsweise durch Verwendung einer hohen Schaltfrequenz der von dem aktiven Filter umfassten Halbleiter und/oder Verwendung einer Mehrpunkt-Schaltungstopologie als aktives Filter erreicht werden. Ferner ist in den Gleichungen (12)-(15) zu erkennen, dass der Netzstrom $i_g$ infolge der vorteilhaften spannungseinprägenden Schaltungskonfiguration vollständig vom Eingangsstrom $i_b$ und der Eingangsspannung $v_b$ entkoppelt ist.

Aus dieser Ausgestaltung leitet sich eine bevorzugte Vorgehensweise im Rahmen der vorliegenden Erfindung ab: Gemäß Gleichung (13) stellt das aktive Filter eine Spannung mit der Grundschwingungskomponente $v_{af}(1)$ dar, die zu einer Grundschwingungskomponente des Netzstroms $i_g(1) \approx i_b(1)$ führt. Dies führt wiederum dazu, dass das aktive Filter nur Verzerrungsstrom führt und daher für eine geringe Leistung ausgelegt werden kann. Die geringe Nennleistung erlaubt wiederum die Verwendung von schnellschaltenden Halbleitern und/oder einer Mehrpunkt-Schaltungstopologie mit verhältnismäßig geringem Aufwand, die letztendlich eine geringe Verzerrung der Filterspannung $\sum_{n=2}^{\infty} v_{af}(n)$ und damit des Netzstroms $\sum_{n=2}^{\infty} i_g(n)$ ermöglichen. In diesem Fall werden hierbei die Oberschwingungen des Eingangsstroms $\sum_{n=2}^{\infty} i_b(n)$ durch das aktive Filter kompensiert, obwohl das aktive Filter lediglich die Grundschwingungskomponente $i_g(1)$ messen und regeln kann. Die hier dargestellte bevorzugte Vorgehensweise stellt gegenüber den aus dem Stand der Technik bekannten Verfahren, die eine Messung, Identifikation und/oder Regelung von Oberschwingungskomponenten $i_b(n), n \geq 2, i_{af}(n), n \geq 2$ oder $i_g(n), n \geq 2$ erfordern, einen erheblichen Vorteil dar. Dies ermöglicht insbesondere eine zuverlässige und frequenzunabhängige Kompensation der Stromoberschwingungen, ohne dass einzelne Oberschwingungskomponenten $i_b(n), n \geq 2, i_{af}(n), n \geq 2$ oder $i_g(n), n \geq 2$ oder die Summe aller Oberschwingungen $\sum_{n=2}^{\infty} i_b(n)$, $\sum_{n=2}^{\infty} i_{af}(n)$ oder $\sum_{n=2}^{\infty} i_g(n)$ gemessen, identifiziert oder geregelt werden müssen. Dies kann insbesondere zu wesentlich geringen Anforderungen an eine Regelungseinheit und damit zu einer Verringerung des Aufwands führen. Auf diese Weise lassen sich Stromoberschwingungen, insbesondere auch sehr hochfrequente Stromoberschwingungen, vorzugsweise über einen sehr weiten Frequenzbereich, effizient verringern, bevorzugt vollständig kompensieren.

Mit anderen Worten: Gemäß den Gleichungen (11) und (13) ergibt sich der Netzstrom $i_g$ somit in Abhängigkeit der netzseitigen Induktivität $L_g$, der Netzspannung $v_g$ und der der von dem aktiven Filter bereitgestellten und auf den Knotenpunkt K einwirkenden Filterspannung $v_{af}$. Da die Netzspannung $v_g$ gemäß Schritt c) gemessen wird und daher bekannt ist, und da die netzseitige Induktivität $L_g$ zumindest näherungsweise konstant ist, kann der Netzstrom $i_g$ unmittelbar durch die als Filterspannung $v_{af}$ bezeichnete Ausgangsspannung des aktiven Filters eingestellt werden. Diese Charakteristik entspricht der eines konventionellen netzseitigen Stromrichters, weshalb zur Bestimmung der erforderlichen Spannung bevorzugt eine konventionelle Netzregelung auf der Basis- von PI-Reglern verwendet werden kann. In vorteilhafter Weise ermöglicht es die vorgeschlagene spannungseinprägende Verschaltung, nieder- und hochfrequente Oberschwingungen durch eine PI-Regelung der Grundschwingungskomponente $i_g(1)$ zu kompensieren. In einer alternativen Ausgestaltung kann die Netzspannung $v_g$ jedoch auch durch Umstellen von Gleichung (11) ermittelt werden.

In einem weiteren Aspekt betrifft die vorliegende Erfindung ein Computerprogramm zur Verringerung von Stromoberschwingungen. Das Computerprogramm umfasst hierbei Befehle, die bei der Ausführung des Programms durch einen Computer diesen veranlassen, die Schritte des Verfahrens zur Verringerung von Stromoberschwingungen auszuführen, insbesondere gemäß einer oder mehreren der oben beschriebenen Ausgestaltungen und/oder gemäß einer oder mehreren der nachfolgend näher beschriebenen Ausgestaltungen.

In einem weiteren Aspekt betrifft die vorliegende Erfindung eine Vorrichtung zur Verringerung von Stromoberschwingungen. Die Vorrichtung umfasst hierbei

- ein aktives Filter, das zur Bereitstellung eines aus einem Knotenpunkt K abfließenden Filterstroms $i_{af}$ unter Anlegen einer Filterspannung $v_{af}$ an den Knotenpunkt $K$ eingerichtet ist;
- mindestens einen Eingang zum Zuführen eines Eingangsstroms $i_b$ an den Knotenpunkt $K$;
- mindestens einen Ausgang zum Bereitstellen eines weiterhin aus dem Knotenpunkt K abfließenden Netzstroms $i_g$ an ein elektrisches Netz; und
- mindestens eine Regelungseinheit, die eingerichtet ist zum

  o Bestimmen von Amplitude und Phasenlage der sinusförmigen Grundschwingungskomponente $i_b(1)$ des Eingangsstroms $i_b$ aus dem zeitlichen Verlauf des Eingangsstroms $i_b$;
  o Messen eines zeitlichen Verlaufs einer Netzspannung $v_g$ des elektrischen Netzes, dem der aus dem Knotenpunkt K abfließende Netzstrom $i_g$ über eine netzseitige Induktivität $L_g$ zugeführt; und
  o Festlegen eines Sollwerts für den Netzstrom $i_g$ mittels des aus dem Knotenpunkt $K$ abfließenden Filterstroms $i_{af}$, wobei der Filterstrom $i_{af}$ derart ausgestaltet ist, dass eine Grundschwingungskomponente $i_g(1)$ des Netzstroms $i_g$ der sinusförmigen Grundschwingungskomponente $i_b(1)$ des Eingangsstroms $i_b$ entspricht; und
  o Einstellen des Netzstroms $i_g$ mittels der von dem aktiven Filter (112) an den Knotenpunkt $K$ angelegten Filterspannung $v_{af}$ unter Berücksichtigung der Netzspannung $v_g$ und der netzseitigen Induktivität $L_g$.

Insbesondere kann, wie oben oder unten näher erläutert, der Netzstrom $i_g$ mittels der von dem aktiven Filter bereitgestellten Filterspannung $v_{af}$ wie folgt gemäß der obigen Gleichung (11) eingestellt werden:

$$i_g = \frac{1}{L_g} \int (v_{af} - v_g) \cdot \partial t \qquad\qquad (11)$$

da die netzseitige Induktivität $L_g$ bekannt ist und der zeitliche Verlauf der Netzspannung $v_g$ gemessen wird.

In einer besonderen Ausgestaltung kann die Regelungseinheit das aktive Filter umfassen. In einer alternativen Ausgestaltung kann das aktive Filter die Regelungseinheit umfassen. In einer weiteren Ausgestaltung können die Regelungseinheit und das aktive Filter als gesonderte Einrichtungen ausgestaltet sein, die jedoch, vorzugsweise über einen Datenbus, derart miteinander in Verbindung stehen, dass das aktive Filter mindestens eine Information an die Regelungseinheit bereitstellen und die Regelungseinheit auf das aktive Filter einwirken kann. Der Begriff der "Regelungseinheit" bezeichnet grundsätzlich eine Einrichtung, die mindestens eine elektronische Recheneinheit, insbesondere einen Mikroprozessor, ein *System-on-Chip* (SOC), einen *digitalen Signalprozessor* (DSP) und/oder ein *Field Programmable Gate Array* (FPGA), umfasst. Die mindestens eine elektronische Recheneinheit kann durch mindestens einen Datenbus zumindest mit dem aktiven Filter in Verbindung treten. Die Regelungseinheit kann aus Daten, die von dem mindestens einen Datenbus übermittelt werden, mindestens eine Information über das aktive Filter erlangen sowie mittels des mindestens einen Datenbus weitere Daten an das aktive Filter übermitteln, um auf diese Weise auf das aktive Filter einzuwirken.

Weiterhin kann die Regelungseinheit mindestens eine Messeinrichtung, insbesondere zur Messung mindestens eines Stroms und/oder einer Spannung, aufweisen oder mit mindestens einer gesonderten Messeinrichtung in Verbindung treten. Erfindungsgemäß kann hierbei mindestens eine der folgenden Messeinrichtung vorhanden sein:

- eine erste Strommesseinrichtung zur Messung des zeitlichen Verlaufs des Eingangsstroms $i_b$;
- eine zweiten Strommesseinrichtung zur Messung des zeitlichen Verlaufs des Netzstroms $i_g$; und
- eine Spannungsmesseinrichtung zur Messung des zeitlichen Verlaufs der Netzspannung $v_g$ des elektrischen Netzes.

Weitere Messeinrichtungen sind jedoch denkbar. Für die Verbindung zwischen der Regelungseinheit und der mindestens einen Messeinrichtung kann sinngemäß die Ausgestaltung der Verbindung zwischen der Regelungseinheit und dem aktiven Filter angewandt werden.

Für weitere Einzelheiten in Bezug auf das Computerprogramm und auf die Vorrichtung zur Verringerung von Stromoberschwingungen wird auf die Beschreibung des erfindungsgemäßen Verfahrens verwiesen.

Im Unterschied zu *D. Bernet et al.,* s.o., erfolgt gemäß der vorliegenden Erfindung eine Kombination einer spannungseinprägenden Verschaltungsweise mit einer entkoppelten, unabhängigen Regelung des aktiven Filters. Hierdurch erfolgt insbesondere die Bestimmung von Amplitude und Phasenlage auf unterschiedliche Weise. In *D. Bernet et al.,* s.o., werden die Amplitude und die Phasenlage durch einen Hauptstromrichter bestimmt. Dies erfolgt durch Abtastung des Ausgangsstroms in der Mitte einer Taktperiode des Hauptstromrichters, wodurch in guter Näherung eine Messung des Strommittelwerts erreicht und eine gleichzeitige Messung von Stromoberschwingungen vermieden wird. Dies erfordert aber eine exakte Kenntnis interner zeitabhängiger Regelungsgrößen des Hauptstromrichters und einen Informationsaustausch für das aktive Filter. Erfindungsgemäß soll jedoch eine Schnittstelle, die für einen derartigen Informationsaustausch erforderlich ist, vermieden werden.

Im Unterschied zu *D. Bernet et al.,* s.o., stellt hier die vom eingesetzten Wechselrichter unabhängige Bestimmung des Sollwerts des Netzstromes einen entscheidenden Vorteil insbesondere für die praktische Anwendung dar:

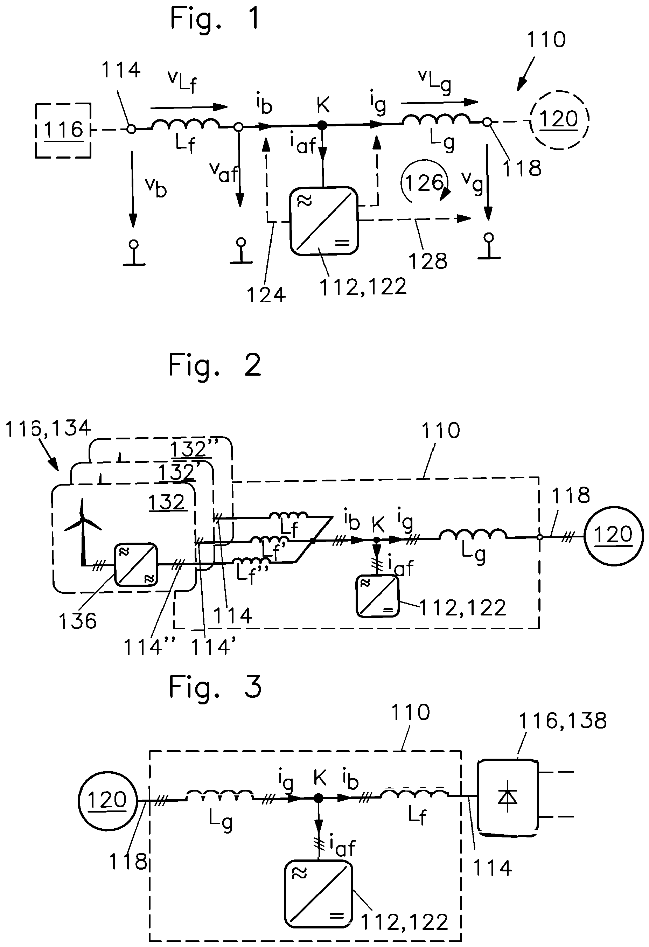

- Die Regelung des aktiven Filters benötigt keine Schnittstelle zur Regelung der eingangsseitigen Last. Dadurch können für den Aufbau einer Anlage kommerzielle Wechselrichter bekannter Hersteller verwendet und nur der hierin vorgeschlagene Ausgangsfilter hinzugefügt werden. Demgegenüber würde *D. Bernet et al.,* s.o., eine Kommunikation mit der Regelung der kommerziellen Wechselrichter erfordern, was sich in der Praxis als schwierig und von den Herstellern als nicht gewollt gezeigt hat.
- Das aktive Filter gemäß der vorliegenden Anmeldung kann an beliebiger Stelle im Energienetz zur harmonischen Kompensation eingesetzt werden, ohne Kenntnis über Anzahl und Art der an diesen Netzpunkt angeschlossenen Lasten zu verfügen.
- Ein einzelnes aktives Filter kann die Oberschwingungen eines ganzen Stromrichterverbunds, z.B. eines Windparks oder Solarparks, kompensieren, siehe Darstellung unten zu Figur 2. Auf diese Weise lassen sich die passiven Ausgangsfilter der Stromrichter des Verbunds deutlich kleiner dimensionieren.
- Das aktive Filter kann an passiven Lasten, wie z.B. einem Dioden-Front-End verwendet werden. Diese sind robust und kostengünstig und werden daher bereits in industriellen Anwendungen eingesetzt. Zur Einhaltung der Netznormen nutzen diese Anlagen üblicherweise passive Filter, deren Kosten vor allem bei hohen Leistungen deutlich über den Kosten des Leistungsteils der Leistungselektronik liegen.

Im Unterschied zu EP 2 991 218 B1, die auf einer Bestimmung und Regelung eines Gesamtstrom-Rippels basiert und die eine Messung von hochfrequenten Strömen und eine ausreichende Mess- und Regelungsbandbreite erfordert, stellt das vorliegende Verfahren deutlich geringere Anforderungen an Mess- und Regelungsbandbreite, da ausschließlich grundschwingungsfrequente Größen zu messen und zu regeln sind. Weiterhin unterscheidet sich die vorliegende Anmeldung in der Schaltungskonfiguration. Der in EP 2 991 218 B1 verwendete Wechselrichter ist über einen Transformator an den Verknüpfungspunkt angeschlossen. Somit wirkt eine Streuinduktivität des Transformators als Kopplungsinduktivität. Weiterhin wird diese Streuinduktivität als Regelstrecke für die Ausgangsstromregelung des Wechselrichters verwendet. Demgegenüber regelt das vorliegende aktive Filter ausschließlich den Grundschwingungsanteil des Netzstroms.

Das vorliegende Verfahren, das Computerprogramm und die beschriebene Vorrichtung eignen sich somit insbesondere zur Erhöhung der Netzstabilität durch die Bereitstellung einer guten Strom- und Spannungsqualität in einer Anordnung umfassend eine Vielzahl von Stromerzeugern, insbesondere in einem Windpark, der eine Vielzahl von einzelnen Turbinen aufweist, oder einem Solarpark, der eine Vielzahl von einzelnen Solarpanels aufweist. Hierbei kann der Eingangsstrom $i_b$ insbesondere durch die Vielzahl der Turbinen des Windparks oder durch die Vielzahl der Solarpanels des Solarparks erzeugt sein. Weitere bevorzugte Anwendungen können Ladestationen für elektrische Fahrzeuge oder netzgebundenen Batterie- oder Wasserstoffspeicher umfassen; weitere Anwendungen sind jedoch denkbar.

Das vorliegende Verfahren und die vorgeschlagene Vorrichtung weist eine Reihe von Vorteilen gegenüber aus dem Stand der Technik bekannten Verfahren und Vorrichtungen auf. Insbesondere in Abgrenzung zu R. R. Pereira et al., siehe oben, ist erfindungsgemäß keine Kopplungsinduktivität $L_{af}$ zwischen dem aktiven Filter und dem Knotenpunkt $K$ erforderlich. Weiterhin erfolgt im Unterscheid zu dem von M. Routimo et al., siehe oben, vorgeschlagenen, auch als "Voltage-Source Active Filter" bezeichneten aktiven Filter eine andere Art der Regelung des Netzstroms $i_g$, die aufgrund des Einsatzes des erfindungsgemäßen spannungseinprägenden aktiven Filter dessen Strombelastung erheblich verringert, da dieser auch in transienten Vorgängen keinen Grundschwingungsstrom führt.

Die vorliegende erfindungsgemäße Ausgestaltung ermöglicht daher eine Auslegung des aktiven Filters für einen Bruchteil der angeschlossenen Lastleistung, was zu einer deutlichen Verringerung des Aufwandes gegenüber dem Stand der Technik führt. Das vorgeschlagene aktive Filter ermöglicht eine zuverlässige und frequenzunabhängige Kompensation der Stromoberschwingungen, ohne dass einzelne Oberschwingungskomponenten $i_b(n)$, $n \geq 2$, $i_{af}(n)$, $n$ $\geq 2$ oder $i_g(n)$, $n \geq 2$ identifiziert oder die Gesamtheit der Oberschwingungen $\sum_{n=2}^{\infty} i_b(n)$, $\sum_{n=2}^{\infty} i_{af}(n)$ oder $\sum_{n=2}^{\infty} i_g(n)$ gemessen und/oder bestimmt werden müssen. Dies kann insbesondere zu wesentlich geringeren Anforderungen an die Regelungseinheit und damit zu einer Verringerung des Aufwandes führen. Damit können Stromoberschwingungen, insbesondere auch sehr hochfrequente Stromoberschwingungen, vorzugsweise über einen sehr weiten Frequenzbereich, effizient verringert, bevorzugt vollständig kompensiert werden. Bei Einsatz an einzelnen oder mehreren Stromrichtern ist somit auch eine deutliche Verringerung der passiven Filterkomponenten möglich, was zu erheblich geringeren Baugrößen führt. Eine Spannungseinprägung des aktiven Filters an einem Netzanschlusspunkt, z.B. eines Windparks oder Solarparks, erlaubt eine nahezu beliebige Einstellung der Übertragungsfunktion eines Stromrichterverbunds, so dass sich Resonanzen und Überlastungen einer Übertragungsleitung, z.B. einer Kabelanbindung eines Offshore-Windparks, durch eine Impedanz-Anpassung verringern lassen.

Hierin werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne dass hierdurch die Möglichkeit eingeschränkt wird, dass das Merkmal oder Element einfach oder mehrfach vorgesehen sein kann.

Weiterhin werden hierin die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten unangetastet bleiben, die hierdurch eingeleiteten Merkmale mit anderen Merkmalen zu kombinieren, seien es optionale oder nicht-optionale Merkmale.

Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist jedoch nicht auf die Ausführungsbeispiele beschränkt. Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente. Im Einzelnen zeigen:

Figur 1    eine schematische Darstellung einer bevorzugten Ausführungsform einer erfindungsgemäßen Vorrichtung zur Verringerung von Stromoberschwingungen;

Figur 2    eine Darstellung einer bevorzugten Anwendung der erfindungsgemäßen Vorrichtung zur Verringerung von Stromoberschwingungen;

Figur 3    eine Darstellung einer ebenfalls bevorzugten Anwendung der erfindungsgemäßen Vorrichtung zur Verringerung von Stromoberschwingungen;

Figur 4    eine Darstellung eines zeitlichen Verlaufs eines typischen dreiphasigen Eingangsstroms $i_b$;

Figur 5    eine Darstellung des zeitlichen Verlaufs eines gemäß dem vorliegenden Verfahren bereitgestellten dreiphasigen Filterstroms $i_{af}$;

Figur 6    eine Darstellung des zeitlichen Verlaufs eines gemäß dem vorliegenden Verfahren erzeugten dreiphasigen Netzstroms $i_g$;

Figur 7    ein Blockschaltbild eines bevorzugten Regelungsverfahrens für die erfindungsgemäße Vorrichtung zur Verringerung von Stromoberschwingungen; und

Figur 8    eine schematische Darstellung einer bevorzugten Ausführungsform eines erfindungsgemäßen Verfahrens zur Verringerung von Stromoberschwingungen.

Beschreibung der Ausführungsbeispiele

Figur 1 zeigt eine schematische Darstellung einer bevorzugten Ausführungsform einer erfindungsgemäßen Vorrichtung 110 zur Verringerung von Stromoberschwingungen. Die hierin schematisch dargestellte Vorrichtung 110 umfasst ein aktives Filter 112, das als Spannungsquelle zur Bereitstellung einer im Folgenden auch als "Filterspannung" bezeichneten Spannung $v_{af}$ an einen unten näher beschriebenen Knotenpunkt $K$ in der Vorrichtung 110 eingerichtet ist, wodurch erfindungsgemäß ein aus dem Knotenpunkt K abfließender Filterstrom $i_{af}$ erzeugt wird. Der als aktives Filter 112 verwendete selbstgeführte Stromrichter kann vorzugsweise auf Silizium- oder Siliziumkarbid-Halbleitern basieren und/oder als Mehrpunkt-Stromrichter ausgeführt sein, der insbesondere eine bekannte Schaltungstopologie, bevorzugt ausgewählt aus 2L-VSC oder 3L-NPC, aufweist; andere Arten der Ausführung des aktiven Filters 112 sind jedoch denkbar.

Weiterhin umfasst die in Figur 1 schematisch dargestellte Vorrichtung 110 einen Eingang 114, der zum Zuführen eines Eingangsstroms $i_b$ aus einer nicht mehr von der Vorrichtung 110 umfassten eingangsseitigen Last 116 an den Knotenpunkt K eingerichtet ist. An dem Eingang 114 liegt eine Eingangsspannung $v_b$ an, die in Verbindung mit der Filterspannung $v_{af}$ zu einem Spannungsabfall über einer lastseitigen Filterinduktivität $L_f$ führt, wodurch der Eingangsstrom $i_b$ erzeugt wird.

Weiterhin umfasst die in Figur 1 schematisch dargestellte Vorrichtung 110 einen Ausgang 118, der zum Bereitstellen eines aus dem Knotenpunkt K abfließenden Netzstroms $i_g$ an ein nicht mehr von der Vorrichtung 110 umfasstes elektrisches Netz 120 eingerichtet ist. Wie Figur 1 zeigt, fließt der Netzstrom $i_g$ hierbei über eine netzseitige Induktivität $L_g$, die insbesondere aus einer Summe von Streuinduktivitäten vorhandener Netzbetriebsmittel, insbesondere von Transformatoren, Kabel oder Freileitungen, aber auch aus einer zusätzlichen Spule, gebildet sein kann, in das elektrische Netz 120.

Während in den Figuren 1 und 2 der Eingang 114 und die eingangsseitige Last 116 links sowie der Ausgang 118 und das das elektrische Netz 120 rechts in Bezug auf den Knotenpunkt K dargestellt sind, zeigt Figur 3 eine umgekehrte Anordnung, in welcher der Eingang 114 und die eingangsseitige Last 116 rechts sowie der Ausgang 118 und das elektrische Netz 120 links in Bezug auf den Knotenpunkt K dargestellt sind. Damit wird zum Ausdruck gebracht, dass die vorliegende Vorrichtung 110 unabhängig von der Anordnung der Eingänge 114 und der Ausgänge 118 und der jeweils verwendeten Arten von Betriebsmitteln funktioniert.

In der Ausführung der Vorrichtung 110 gemäß Figur 1 ist nach dem 1. Kirchhoffschen Gesetz gemäß der nachstehenden Gleichung (16) in dem Knotenpunkt K die Summe der zufließenden Ströme, d.h. der Eingangsstrom $i_b$, gleich einer Summe der abfließenden Ströme, d.h. der Summe aus dem Filterstrom $i_{af}$ und dem Netzstrom $i_g$:

$$i_b = i_g + i_{af}, \qquad\qquad (16)$$

Im allgemeinen umfasst der Eingangsstrom $i_b$ gemäß Gleichung (17) eine sinusförmige Grundschwingungskomponente $i_b(1)$ sowie eine Summe aller Oberschwingungskomponenten $i_b(n)$, $n \geq 2$:

$$i_b = i_b(1) + \sum_{n=2}^{\infty} i_b(n). \qquad (17)$$

Weiterhin umfasst die Vorrichtung 110 eine Regelungseinheit 122, die, wie Figur 1 schematisch zeigt, von dem aktiven Filter 122 umfasst ist. Eine separate Regelungseinheit 122 ist jedoch denkbar. Erfindungsgemäß ist die Regelungseinheit 122 derart ausgestaltet, dass der von dem aktiven Filter 112 erzeugte Filterstrom $i_{af}$ gemäß Gleichung (18) die Summe der Oberschwingungskomponenten $i_b(n)$, $n \geq 2$ möglichst vollständig übernimmt:

$$i_{af} = \sum_{n=2}^{\infty} i_b(n), \qquad (18)$$

so dass für den aus dem Knotenpunkt K ebenfalls abfließenden Netzstrom $i_g$ gemäß Gleichung (19) möglichst nur noch die sinusförmige Grundschwingungskomponente $i_b(1)$ verbleibt:

$$i_g = i_b(1). \qquad (19)$$

Um zu erreichen, dass der Netzstrom $i_g$ und der Eingangsstrom $i_b$ dieselbe sinusförmige Grundschwingungskomponente $i_b(1)$ aufweisen, ist die Regelungseinheit 122 weiterhin dazu eingerichtet, den Eingangsstrom $i_b$ mittels einer ersten Strommesseinrichtung 124 zu messen und hieraus zumindest eine Amplitude und eine Phasenlage der sinusförmigen Grundschwingungskomponente $i_b(1)$ zu bestimmen. Im Unterschied zu vielen aus dem Stand der Technik bekannten Vorrichtungen ist hierbei jedoch keine Bestimmung der Amplituden und der Phasenlagen von Oberschwingungskomponenten $i_b(n)$, $n \geq 2$, $i_{af}(n)$, $n \geq 2$ oder $i_g(n)$, $n \geq 2$ oder der Gesamtheit des Rippelstroms $\sum_{n=2}^{\infty} i_b(n)$, $\sum_{n=2}^{\infty} i_{af}(n)$ oder $\sum_{n=2}^{\infty} i_g(n)$ erforderlich. Wie oben näher erläutert, können die Amplitude und die Phasenlage der sinusförmigen Grundschwingungskomponente $i_b(1)$ aus dem gemessenen Eingangsstrom $i_b$ insbesondere eine Transformation und/oder eine Glättung des über einen Zeitraum gemessenen zeitlichen Verlaufs des Eingangsstroms $i_b$ umfassen.

Wie weiterhin oben erwähnt, ist das spannungseinprägende aktive Filter 112 dazu eingerichtet, die Filterspannung $v_{af}$ bereitzustellen, die direkt auf den Knotenpunkt $K$ der Vorrichtung 110 einwirkt, ohne, wie vergleichbare aus dem Stand der Technik bekannte Vorrichtungen, zuvor über eine erfindungsgemäß entbehrliche Kopplungsinduktivität $L_{af}$ abzufallen.

Nach dem 2. Kirchhoffschen Gesetz addieren sich alle Teilspannungen eines Umlaufs in einem Teil 126 der Vorrichtung 110 gemäß Gleichung (20) unter Berücksichtigung ihrer Richtung zu null auf:

$$- v_{af} + v_{Lg} + v_g = 0, \qquad (20)$$

wobei $v_g$ die Netzspannung des elektrischen Netzes 120 und $v_{Lg}$ die über der netzseitigen Induktivität $L_g$ abfallende Spannung bezeichnen. Durch Umformen ergibt sich aus Gleichung (20) die über der netzseitigen Induktivität $L_g$ abfallende Spannung $v_{Lg}$ gemäß Gleichung (21) zu

$$v_{Lg} = v_{af} - v_g. \qquad (21)$$

Die über der netzseitigen Induktivität $L_g$ abfallende Spannung $v_{Lg}$ kann andererseits jedoch gemäß der nachstehenden Gleichung (22) aus der sog. "Selbstinduktivität" der von dem Netzstrom $i_g$ durchflossenen netzseitigen Induktivität $L_g$ und aus dem zeitlichen Verlauf des Netzstroms $i_g$ zu

$$v_{Lg} = L_g \cdot \frac{\partial i_g}{\partial t} \qquad (22)$$

angeben werden, wobei $\frac{\partial i_g}{\partial t}$ eine zeitliche Änderung des Netzstroms $i_g$ angibt. Gleichung (22) lässt sich nach der Änderung des Netzstroms $i_g$ wie folgt in Gleichung (23) auflösen:

$$\partial i_g = \frac{1}{L_g} \cdot v_{Lg} \cdot \partial t. \qquad (23)$$

Durch Integrieren der beiden Seiten in Gleichung (23) kann hieraus gemäß Gleichung (24) der Netzstrom $i_g$ bestimmt werden:

$$i_g = \frac{1}{L_g} \int v_{Lg} \cdot \partial t. \qquad (24)$$

Ein Einsetzen der Beziehung für die über der netzseitigen Induktivität $L_g$ abfallenden Spannung $v_{Lg}$ gemäß Gleichung (21) in Gleichung (24) führt schließlich zu folgendem Ergebnis:

$$i_g = \frac{1}{L_g} \int (v_{af} - v_g) \cdot \partial t. \qquad (25)$$

Aus Gleichung (25) ergibt sich insbesondere, dass sich der Netzstrom $i_g$ bei bekannter netzseitiger Induktivität $L_g$ und bei gemessener Netzspannung $v_g$ durch die von dem aktiven Filter bereitgestellten Filterspannung $v_{af}$ auf einfache und unmittelbare Weise einstellen lässt. Hierzu ist die Regelungseinheit 122 weiterhin dazu eingerichtet, den zeitlichen Verlauf der Netzspannung $v_g$ des elektrischen Netzes 120 mittels einer Spannungsmesseinrichtung 128 zu ermitteln, und die Amplitude und die Phasenlage der Grundschwingungskomponente $i_g(1)$ des Netzstroms $i_g$ mittels der von dem aktiven Filter 112 an den Knotenpunkt K angelegten Filterspannung $v_{af}$ unter Berücksichtigung der Netzspannung $v_g$ und der netzseitigen Induktivität $L_g$ einzustellen.

Für die in Figur 3 dargestellte alternative Ausführung der Vorrichtung 110 können analoge Überlegungen angestellt werden, die zum selben Ergebnis führen.

Figur 1 zeigt eine bevorzugte Ausführungsform der vorliegenden Vorrichtung, gemäß der die Regelungseinheit 122 weiterhin dazu eingerichtet ist, mittels einer zweiten Strommesseinrichtung 130 auch den zeitlichen Verlauf des Netzstroms $i_g$ zu erfassen, insbesondere um eine Qualität der Regelung der Grundschwingungskomponente $i_g(1)$ des Netzstroms $i_g(1)$ zu ermitteln.

Bevorzugte Beispiele für die eingangsseitige Last 116 finden sich in den Figuren 2 und 3. Figur 2 zeigt eine eingangsseitige Last 116, die beispielhaft drei voneinander unabhängige Turbinen 132, 132', 132" eines Windparks 134 umfasst. Die Anzahl der Turbinen 132, 132', 132" ist jedoch beliebig. Jeder der Turbinen 132, 132', 132" ist ein passives Filterelement 136 zugeordnet, das insbesondere Spulen, Kondensatoren und Widerstände umfassen kann und das bereits eine vorläufige Verringerung der von jeder der Turbinen 132, 132', 132" jeweils erzeugten Stromoberschwingungen ermöglicht. Durch Verwendung der Vorrichtung 110 kann jedoch jedes der passiven Filterelemente 136 im Vergleich zu einer Ausführung ohne Vorrichtung 110 in besonders vorteilhafter Weise kleiner dimensioniert werden, wobei der in das elektrische Netz 120 eingespeiste Netzstroms $i_g$ dennoch vorgeschriebene Grenzwerte einhalten kann. Durch eine hochdynamische Regelung des Netzstroms $i_g$ durch das erfindungsgemäß spannungseinprägende aktive Filter 112 ist es möglich, das aktive Filter 112 nur für einen sehr geringen Bruchteil der elektrischen Gesamtleistung des Windparks 134 und daher mit vergleichsweise geringerem Aufwand auszulegen.

Figur 3 zeigt eine weitere eingangsseitige Last 116, die beispielhaft ein Dioden-Frontend 138, beispielsweise für einen Einsatz in einer industriellen Fertigungsanlage, umfasst. Insbesondere gegenüber dem in M. Routimo et al. siehe oben, beschriebenen, auch als "Voltage-Source Active Filter" bezeichneten aktiven Filter ermöglicht eine Kombination aus dem erfindungsgemäßen spannungseinprägenden aktiven Filter 112 und der hochdynamischen Regelung des Netzstroms $i_g$ eine erhebliche Verringerung einer Strombelastung des aktiven Filters 112, da dieser auch in transienten Vorgängen keinen Grundschwingungsstrom führt. Diese Ausführung ermöglicht daher eine Auslegung des aktiven Filters 112 für eine geringe elektrische Leistung und führt damit zu einer erheblichen Verringerung des damit verbundenen Aufwands.

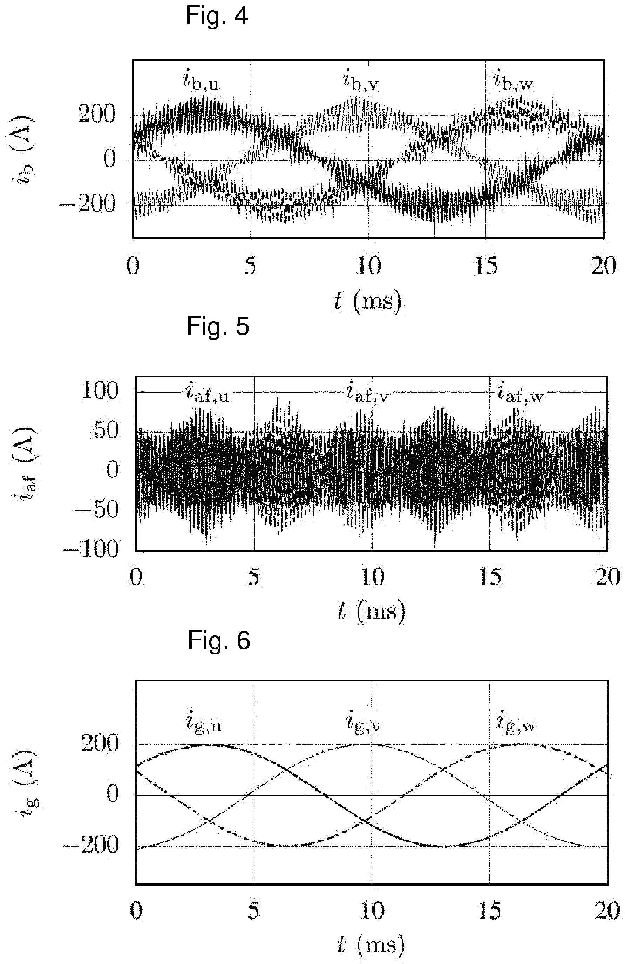

Figur 4 zeigt eine Darstellung eines zeitlichen Verlaufs eines typischen dreiphasigen Eingangsstroms $i_b$ in Ampere zu einer Zeit t innerhalb eines Zeitraums von 20 ms. Hieraus ist erkennbar, dass der Eingangsstrom $i_b$ für jede der drei Phasen $u$, $v$, $w$ gemäß Gleichung (17) eine sinusförmige Grundschwingungskomponente $i_b(1)$ sowie eine Summe aller Oberschwingungskomponenten $i_b(n)$, $n \geq 2$ gemäß der obigen Gleichung (17) aufweist:

$$i_b = i_b(1) + \sum_{n=2}^{\infty} i_b(n). \qquad (17)$$

Figur 5 zeigt eine Darstellung eines zeitlichen Verlaufs eines typischen dreiphasigen Filterstroms $i_{af}$ in Ampere zu einer Zeit $t$ innerhalb desselben Zeitraums von 20 ms. Hieraus ist erkennbar, dass der von dem erfindungsgemäßen spannungseinprägenden aktiven Filter 112 erzeugte Filterstrom $i_{af}$ für jede der drei Phasen $u$, $v$, $w$ gemäß Gleichung (18) die Summe der Oberschwingungskomponenten $i_b(n)$, $n \geq 2$ gemäß der obigen Gleichung (18) möglichst vollständig übernimmt:

$$i_{af} = \sum_{n=2}^{\infty} i_b(n) \qquad (18)$$

Figur 6 zeigt eine Darstellung eines zeitlichen Verlaufs eines typischen dreiphasigen Netzstroms $i_g$ in Ampere zu einer Zeit t innerhalb desselben Zeitraums von 20 ms. Hieraus ist erkennbar, dass der aus dem Knotenpunkt K abfließende Netzstrom $i_g$ für jede der drei Phasen $u$, $v$, $w$ gemäß Gleichung (19) gemäß der obigen Gleichung (19) möglichst nur noch die sinusförmige Grundschwingungskomponente $i_b(1)$ aufweist:

$$i_g = i_b(1). \qquad (19)$$

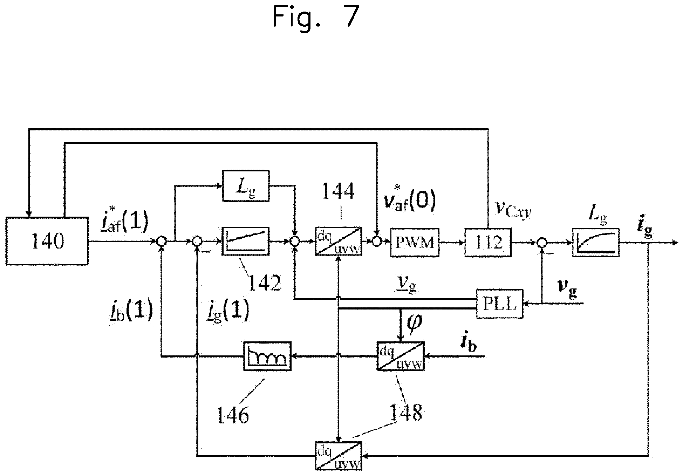

Figur 7 zeigt ein Blockschaltbild eines bevorzugten Regelungsverfahrens für die erfindungsgemäße Vorrichtung 110 zur Verringerung von Stromoberschwingungen. Entsprechend dem darin skizzierten Regelungsverfahren wird die gemessene, dreiphasige Netzspannung $v_g$ durch eine Phasenregelschleife PLL in das Koordinatensystem mit den Koordinatenachsen d, q transformiert. Die gemessenen dreiphasigen Netz- und Eingangsströme $i_g$ und $i_b$ werden unter Verwendung des hierbei ebenfalls bestimmten Netzwinkels $\varphi$ durch eine Park-Transformation 148 in das Koordinatensystem mit den Koordinatenachsen d, q transformiert.

Die Glättung des transformierten zeitlichen Verlaufs des Eingangsstroms $i_b$ erfolgt hierbei mittels eines Gleitenden Mittelwert-Filters 146. Zur Regelung der Grundschwingungskomponente $i_g(1)$ des Netzstroms $i_g$ wird ein PI-Regler 142 eingesetzt, der als Eingangssignal die Differenz der Grundschwingungskomponente $i_g(1)$ des Netzstroms und des Sollwerts erhält. Der Sollwert setzt sich aus der Summe der Grundschwingungskomponente $i_b(1)$ des Eingangsstroms $i_b$ und der Grundschwingungskomponente $i_{af}(1)$ des Filterstroms $i_{af}$ zusammen. Die Grundschwingungskomponente $i_{af}(1)$ des Filterstroms $i_{af}$, welche zur Verlustdeckung erforderlich ist, wird durch eine Energieregelung 140 bestimmt.

Zur Verbesserung des Führungsgrößenverhaltens des Regelkreises erfolgt eine Vorsteuerung des Sollwerts durch Multiplikation mit der netzseitigen Induktivität $L_g$. Die Summe der Vorsteuerspannung, des Ausgangs des PI-Reglers 142 und der Netzspannung $v_g$, die als "Gesamtspannung" bezeichnet wird, wird durch eine inverse Park-Transformation 144 in dreiphasige Koordinaten zurück transformiert. Zu der Gesamtspannung wird bei Einsatz einer Stromrichtertopologie mit verteilten Gleichspannungszwischenkreisen als das aktive Filter 112 die durch die Energieregelung 140 zu bestimmende Gleichtaktspannung $v_{af}^*(0)$ addiert. Die Gesamtspannung wird einem Eingang eines Modulationsverfahrens, bevorzugt einer Pulsweitenmodulation PWM, zugeführt, welches die Schaltsignale für die Leistungshalbleiter des aktiven Filters 112 erzeugt.

Der Netzstrom $i_g$ stellt sich schließlich gemäß Gleichung (11) als Funktion der netzseitigen Induktivität $L_g$, der Filterspannung $v_{af}$ und der Netzspannung $v_g$ ein.

Für weitere Einzelheiten zu der Darstellung gemäß Figur 7 wird auf die Beschreibung der bevorzugten Ausführungsform der erfindungsgemäßen Vorrichtung 110 zur Verringerung von Stromoberschwingungen zu Figur 1 verwiesen.

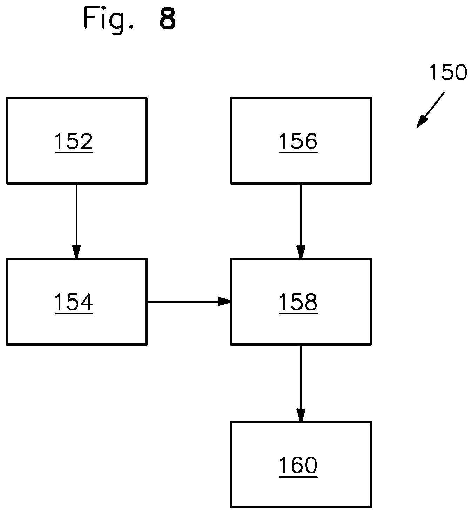

Figur 8 zeigt eine schematische Darstellung einer bevorzugten Ausführungsform eines erfindungsgemäßen Verfahrens 150 zur Verringerung von Stromoberschwingungen.

In einem Zuführungsschritt 152 erfolgt gemäß Schritt a) des Verfahrens 150 ein Zuführen des Eingangsstroms $i_b$ an den Knotenpunkt $K$, welcher mit dem erfindungsgemäßen spannungseinprägenden aktiven Filter 112 verbunden ist, wobei der Eingangsstrom $i_b$ die sinusförmige Grundschwingungskomponente $i_b(1)$ und die Summe der Oberschwingungskomponenten $i_b(n)$, $n \geq 2$ umfasst.

In einem Bestimmungsschritt 154 erfolgt gemäß Schritt b) des Verfahrens 150 ein Bestimmen der Amplitude und der Phasenlage der sinusförmigen Grundschwingungskomponente $i_b(1)$ des Eingangsstroms $i_b$ aus dem zeitlichen Verlauf des Eingangsstroms $i_b$. Hierzu kann insbesondere ein Messen des zeitlichen Verlaufs des Eingangsstroms $i_b$

erfolgen.

In einem Messschritt 156 erfolgt gemäß Schritt c) des Verfahrens 150 ein Messen eines zeitlichen Verlaufs der Netzspannung $v_g$ des elektrischen Netzes 120, dem der aus dem Knotenpunkt $K$ abfließende Netzstrom $i_g$ über die netzseitige Induktivität $L_g$ zugeführt wird.

In einem Festlegungsschritt 158 erfolgt gemäß Schritt d) des Verfahrens 150 ein Festlegen des Sollwerts für den Netzstrom $i_g$ mittels des aus dem Knotenpunkt $K$ abfließenden Filterstroms $i_{af}$, wobei der Filterstrom $i_{af}$ derart ausgestaltet ist, dass die Grundschwingungskomponente des Netzstroms $i_g(1)$ der sinusförmigen Grundschwingungskomponente $i_b(1)$ des Eingangsstroms $i_b$ entspricht.

In einem Bereitstellungsschritt 160 erfolgt gemäß Schritt e) des Verfahrens 150 ein Bereitstellen des Netzstroms $i_g$ über die netzseitige Induktivität $L_g$ an das elektrische Netz 120, wobei der Netzstrom $i_g$ mittels der von dem aktiven Filter bereitgestellten Filterspannung $v_{af}$ unter Berücksichtigung der Netzspannung $v_g$ und der netzseitigen Induktivität $L_g$ eingestellt wird. Hierdurch entspricht der Netzstrom $i_g$ vorzugsweise der sinusförmigen Grundschwingungskomponente $i_b(1)$ des Eingangsstroms $i_b$, so dass insbesondere die Summe der Oberschwingungskomponenten $i_g(n)$, $n \geq 2$ möglichst vernachlässigbar ist. In einer besonders bevorzugten Ausführung kann der Bereitstellungsschritt 160 gemäß Schritt e) ein Messen eines zeitlichen Verlaufs des der Netzstrom $i_g$ gemäß Schritt f) umfassen.

Bezugszeichenliste

| | |
|---|---|
| 110 | Vorrichtung zur Verringerung von Stromoberschwingungen |
| 112 | aktives Filter |
| 114 | Eingang |
| 116 | eingangsseitige Last |
| 118 | Ausgang |
| 120 | elektrisches Netz |
| 122 | Regelungseinheit |
| 124 | erste Strommesseinrichtung |
| 126 | Teil (der Vorrichtung) |
| 128 | Spannungsmesseinrichtung |
| 130 | zweite Strommesseinrichtung |
| 132, 132', 132" | Turbine |
| 134 | Windpark |
| 136 | passives Filterelement |
| 138 | Dioden-Frontend |
| 140 | Energieregelung |
| 142 | PI-Regler |
| 144 | inverse Park-Transformation |
| 146 | Gleitendes Mittelwert-Filters |
| 148 | Park-Transformation |
| 150 | Verfahren zur Verringerung von Stromoberschwingungen |
| 152 | Zuführungsschritt |
| 154 | Bestimmungsschritt |
| 156 | Messschritt |
| 158 | Festlegungsschritt |
| 160 | Bereitstellungsschritt |

**Patentansprüche**

1.  Verfahren (150) zur Verringerung von Stromoberschwingungen, umfassend die Schritte:

    a) Zuführen eines Eingangsstroms $i_b$ an einen Knotenpunkt $K$, welcher mit einem aktiven Filter (112) verbunden ist, wobei der Eingangsstrom $i_b$ eine sinusförmige Grundschwingungskomponente $i_b(1)$ und eine Summe von Oberschwingungskomponenten $i_b(n)$, $n \geq 2$ umfasst;
    b) Bestimmen von Amplitude und Phasenlage der sinusförmigen Grundschwingungskomponente $i_b(1)$ des Eingangsstroms $i_b$ aus dem zeitlichen Verlauf des Eingangsstroms $i_b$;
    c) Messen eines zeitlichen Verlaufs einer Netzspannung $v_g$ eines elektrischen Netzes (120), dem ein aus dem Knotenpunkt $K$ abfließender Netzstrom $i_g$ über eine netzseitige Induktivität $L_g$ zugeführt wird;

d) Festlegen eines Sollwerts für den Netzstrom $i_g$ mittels eines weiterhin aus dem Knotenpunkt $K$ abfließenden Filterstroms $i_{af}$, wobei der Filterstrom $i_{af}$ derart ausgestaltet ist, dass eine Grundschwingungskomponente $i_g(1)$ des Netzstroms $i_g$ der sinusförmigen Grundschwingungskomponente $i_b(1)$ des Eingangsstroms $i_b$ entspricht; und

e) Bereitstellen des Netzstroms $i_g$ über die netzseitige Induktivität $L_g$ an das elektrische Netz (120), wobei der Netzstrom $i_g$ mittels einer von dem aktiven Filter (112) bereitgestellten Filterspannung $v_{af}$ unter Berücksichtigung der Netzspannung $v_g$ und einer netzseitigen Induktivität $L_g$ eingestellt wird.

2. Verfahren (150) nach dem vorangehenden Anspruch, wobei der Netzstrom $i_g$ mittels der von dem aktiven Filter (112) bereitgestellten Filterspannung $v_{af}$ wie folgt eingestellt wird:

$$i_g = \frac{1}{L_g} \int (v_{af} - v_g) \cdot \partial t.$$

3. Verfahren (150) einem der vorangehenden Ansprüche, umfassend den weiteren Schritt:
f) Messen eines zeitlichen Verlaufs des Netzstroms $i_g$.

4. Verfahren (150) nach einem der vorangehenden Ansprüche, wobei der Eingangsstrom $i_b$ mindestens zwei, bevorzugt drei, voneinander unabhängige Phasen umfasst, wobei das Bestimmen der Amplitude und der Phasenlage der sinusförmigen Grundschwingungskomponente $i_b(1)$ des Eingangsstroms $i_b$ gesondert für den zeitlichen Verlauf jeder Phase des Eingangsstroms $i_b$ über den Zeitraum erfolgt.

5. Verfahren (150) nach dem vorangehenden Anspruch, wobei das Bestimmen der Amplitude und der Phasenlage der sinusförmigen Grundschwingungskomponente $i_b(1)$ des Eingangsstroms $i_b$ eine Transformation und Glättung des über einen Zeitraum gemessenen zeitlichen Verlaufs des Eingangsstroms $i_b$ umfasst.

6. Verfahren (150) nach dem vorangehenden Anspruch, wobei die Transformation eine Park-Transformation des zeitlichen Verlaufs des Eingangsstroms $i_b$ über den Zeitraum umfasst.

7. Verfahren (150) nach einem der beiden vorangehenden Ansprüche, wobei die Glättung des transformierten zeitlichen Verlaufs des Eingangsstroms $i_b$ über den Zeitraum mittels eines Gleitenden Mittelwert-Filters oder eines Tiefpass-Filters erfolgt.

8. Computerprogramm, umfassend Befehle, die bei der Ausführung des Programms durch einen Computer diesen veranlassen, die Schritte des Verfahrens (150) nach einem der vorangehenden Ansprüche auszuführen.

9. Vorrichtung (110) zur Verringerung von Stromoberschwingungen, umfassend:

- ein aktives Filter (112), das zur Bereitstellung eines aus einem Knotenpunkt $K$ abfließenden Filterstroms $i_{af}$ unter Anlegen einer Filterspannung $v_{af}$ an den Knotenpunkt $K$ eingerichtet ist;
- mindestens einen Eingang (114) zum Zuführen eines Eingangsstroms $i_b$ an den Knotenpunkt $K$;
- mindestens einen Ausgang (118) zum Bereitstellen eines weiterhin aus dem Knotenpunkt $K$ abfließenden Netzstroms $i_g$ an ein elektrisches Netz (120); und
- mindestens eine Regelungseinheit (122), die eingerichtet ist zum

    o Bestimmen von Amplitude und Phasenlage der sinusförmigen Grundschwingungskomponente $i_b(1)$ des Eingangsstroms $i_b$ aus dem zeitlichen Verlauf des Eingangsstroms $i_b$;
    o Messen eines zeitlichen Verlaufs einer Netzspannung $v_g$ des elektrischen Netzes (120), dem der aus dem Knotenpunkt $K$ abfließende Netzstrom $i_g$ über eine netzseitige Induktivität $L_g$ zugeführt; und
    o Festlegen eines Sollwerts für den Netzstrom $i_g$ mittels des aus dem Knotenpunkt $K$ abfließenden Filterstroms $i_{af}$, wobei der Filterstrom $i_{af}$ derart ausgestaltet ist, dass eine Grundschwingungskomponente $i_g(1)$ des Netzstroms $i_g$ der sinusförmigen Grundschwingungskomponente $i_b(1)$ des Eingangsstroms $i_b$ entspricht; und
    o Einstellen des Netzstroms $i_g$ mittels der von dem aktiven Filter (112) an den Knotenpunkt $K$ angelegten Filterspannung $v_{af}$ unter Berücksichtigung der Netzspannung $v_g$ und der netzseitigen Induktivität $L_g$.

**10.** Vorrichtung (110) nach dem vorangehenden Anspruch, wobei die mindestens eine Regelungseinheit (122) dazu eingerichtet ist, den Netzstrom $i_g$ mittels der von dem aktiven Filter (112) bereitgestellten Filterspannung $v_{af}$ wie folgt einzustellen:

$$i_g = \frac{1}{L_g} \int (v_{af} - v_g) \cdot \partial t.$$

**11.** Vorrichtung (110) nach einem der vorangehenden Vorrichtungsansprüche, wobei die mindestens eine Regelungseinheit (122) weiterhin eingerichtet ist zum
o Messen eines zeitlichen Verlaufs des Netzstroms $i_g$.

**12.** Vorrichtung (110) nach einem der vorangehenden Vorrichtungsansprüche, wobei zwischen dem aktiven Filter (112) und dem Knotenpunkt $K$ keine Kopplungsinduktivität $L_{af}$ vorhanden ist.

## Fig. 1

## Fig. 2

## Fig. 3

Fig. 4

Fig. 5

Fig. 6

Fig. 7

Fig. **8**

150

152

156

154

158

160

Europäisches
Patentamt

European
Patent Office

Office européen
des brevets

# EUROPÄISCHER RECHERCHENBERICHT

Nummer der Anmeldung

EP 22 15 2395

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BERNET DANIEL ET AL: "Grid-Connected Voltage Source Converters with integrated Multilevel-Based Active Filters", 2018 IEEE ENERGY CONVERSION CONGRESS AND EXPOSITION (ECCE), IEEE, 23. September 2018 (2018-09-23), Seiten 127-134, XP033463717, DOI: 10.1109/ECCE.2018.8557648 [gefunden am 2018-12-03] * Seite 131 - Seite 132; Abbildungen 8-11 * | 1-12 | INV. H02M1/12 H02J1/02 H02M7/493 H02M7/5387 |
| A | BERNET DANIEL ET AL: "A Hybrid Medium Voltage Multilevel Converter with Parallel Voltage-Source Active Filter", 2019 10TH INTERNATIONAL CONFERENCE ON POWER ELECTRONICS AND ECCE ASIA (ICPE 2019 - ECCE ASIA), THE KOREAN INSTITUTE OF POWER ELECTRONICS (KIPE), 27. Mai 2019 (2019-05-27), Seiten 1-8, XP033596678, [gefunden am 2019-08-13] * Seite 412 - Seite 413; Abbildungen 1-4, 6 * * Gl. (6); Seite 415 * * Gl. (4); Seite 128 * | 1-12 | |

RECHERCHIERTE SACHGEBIETE (IPC)

H02M
H02J

Der vorliegende Recherchenbericht wurde für alle Patentansprüche erstellt

| Recherchenort | Abschlußdatum der Recherche | Prüfer |
|---|---|---|
| Den Haag | 3. Juni 2022 | Zeljkovic, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2991218 B1

**In der Beschreibung aufgeführte Nicht-Patentliteratur**

- **B. SINGH ; K. AL-HADDAD ; A. CHANDRA.** A Review of Active Filters for Power Quality Improvement. *IEEE Transactions on Industrial Electronics,* 1999, vol. 46 (5), 960-71
- **C. LASCU ; L. ASIMINOAEI ; I. BOLDEA ; F. BLAABJERG.** Frequency Response Analysis of Current Controllers for Selective Harmonie Compensation in Active Power Filters. *IEEE Transactions On Industrial Electronics,* 2009, vol. 56 (2), 337-47
- **R. R. PEREIRA ; C. H. DA SILVA ; L. E. B. DA SILVA ; G. LAMBERT-TORRES ; J, O. P. PINTO.** New Strategies for Application of Adaptive Filters in Active Power Filters. *IEEE Transactions on Industry Applications,* 2011, vol. 47 (3), 1136-41
- **M. ROUTIMO, M. ; H. TUUSA.** Current Sensorless Control of a Voltage-Source Active Power Filter. *Twentieth Annual IEEE Applied Power Electronics Conference and Exposition,* 2005, 1696-1702
- **M. E. ORTUZAR ; R, E. CARMI ; J. W. DIXON ; L. MORAN.** Voltage-source active power filter based on Multilevel Converter and Ultracapacitor DC Link. *IEEE Transactions On Industrial Electronics,* 2006, vol. 53 (2), 477-85
- **M. ANGULO ; D. A. RUIZ-CABALLERO ; J. LAGO ; M. L. HELDWEIN ; S. A. MUSSA.** Active Power Filter Control Strategy With Implicit Closed-Loop Current Control and Resonant Controller. *IEEE Transactions On Industrial Electronics,* 2013, vol. 60 (7), 2721-30
- **D. BERNET ; L. STEFANSKI ; R. SCHWENDEMANN ; CH. ROLLBÜHLER ; M. HILLER.** Grid-Connected Voltage Source Converters with integrated Multilevel-Based Active Filters. *2018 IEEE Energy Conversion Congress and Exposition (ECCE),* 2018